(19) Europäisches Patentamt

European Patent Office

Office européen des brevets

(11) Numéro de publication : **0 327 449 B1**

(12) **FASCICULE DE BREVET EUROPEEN**

(45) Date de publication du fascicule du brevet :
**02.01.92 Bulletin 92/01**

(51) Int. Cl.⁵ : **F16C 11/04,** F16C 33/20,
B60T 7/04

(21) Numéro de dépôt : **89400276.5**

(22) Date de dépôt : **01.02.89**

(54) **Support de pédale.**

(30) Priorité : **01.02.88 FR 8801406**

(43) Date de publication de la demande :
**09.08.89 Bulletin 89/32**

(45) Mention de la délivrance du brevet :
**02.01.92 Bulletin 92/01**

(84) Etats contractants désignés :
**DE ES GB IT**

(56) Documents cités :
**DE-A- 3 511 027**
**FR-A- 2 544 034**
**GB-A- 2 069 072**
**US-A- 4 306 820**

(73) Titulaire : **AUTOMOBILES PEUGEOT**
**75, avenue de la Grande Armée**
**F-75116 Paris (FR)**
Titulaire : **AUTOMOBILES CITROEN**
**62 Boulevard Victor-Hugo**
**F-92200 Neuilly-sur-Seine (FR)**

(72) Inventeur : **Cornec, René**
**18, rue Fessart**
**F-92100 Boulogne-Billancourt (FR)**

(74) Mandataire : **Boivin, Claude**
**9, rue Edouard-Charton**
**F-78000 Versailles (FR)**

**Description**

La présente invention concerne un support formant palier pour un axe, notamment pour un axe de pédale, comportant une embase, en matière plastique, formant corps de palier et propre à être fixée sur une paroi, et un chapeau de palier, également en matière plastique, fixé sur l'embase en enserrant l'axe.

Dans les supports de ce genre actuellement connus, le couvercle est fixé sur le corps de palier par des boulons qui assurent en même temps la fixation de ce corps sur une paroi, par exemple le plancher d'un véhicule automobile. Du fait de ce montage, il est impossible d'assembler préalablement la pédale et son palier ; la longueur des vis de fixation est importante et les efforts de maintien de l'axe de la pédale sont mal répartis. L'ensemble monté doit être suffisamment accessible pour permettre le serrage des boulons.

Le document FR-A-2544034 décrit une béquille de capot qui est maintenue par un bloc de fixation clippé sur une traverse et verrouillé en position par introduction d'un bloc de verrouillage dans le bloc de fixation. Mais cette opération est délicate et peu réalisable avec un robot.

Le document DE-A-3511027 décrit un palier dans lequel l'axe n'est pas monté directement dans le palier mais glissé dans un coussinet placé dans une rigole d'une embase et immobilisé par un chapeau se rabattant afin d'accrocher son extrémité latérale dans une encoche du support de palier. Mais les efforts verticaux tendent à faire sortir l'axe de son palier, l'encoche pouvant se déformer et laisser échapper l'extrémité latérale du chapeau.

La présente invention a pour objet un support formant palier, qui remédie à ces inconvénients.

Le support selon l'invention est caractérisé par des décrochements proéminents, en forme de rampes obliques, formés dans la partie supérieure de l'embase et coopérant avec des rampes de même obliquité formées sur le chapeau du palier, pour maintenir le chapeau de palier, ce chapeau étant mis en place par translation de celui-ci sur l'embase et le blocage du mouvement de translation étant obtenu par clippage.

On a décrit ci-après, à titre d'exemple non limitatif, un mode de réalisation du support selon l'invention, avec référence au dessin annexé dans lequel :

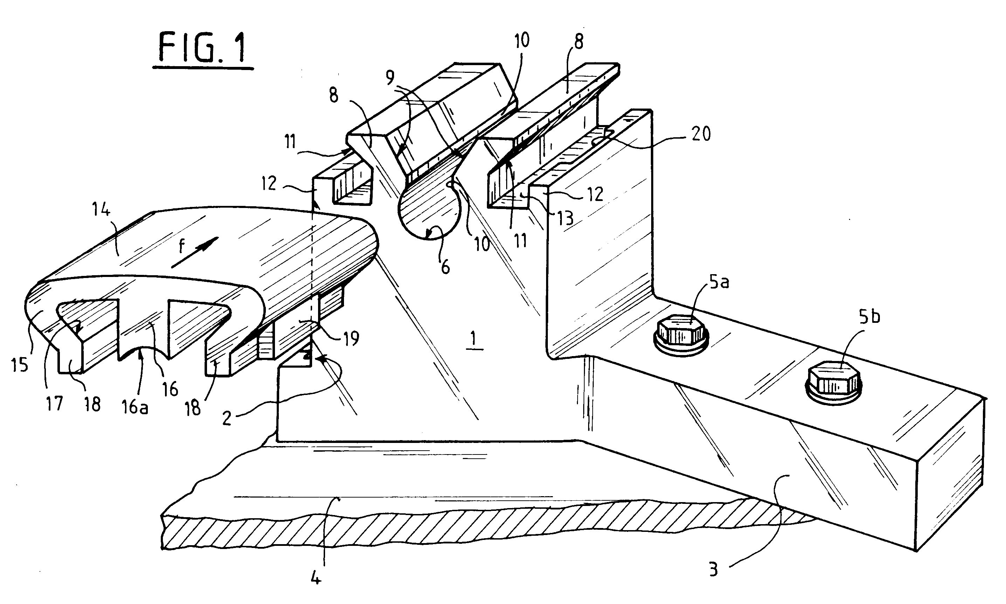

La Figure 1 est une vue en perspective du support montrant séparés l'embase et le chapeau ;
La Figure 2 est une vue en élévation latérale du support monté.

Tel qu'il est représenté au dessin, le support selon l'invention comprend un corps ou embase 1 en matière plastique, dont la partie inférieure comporte sur sa face arrière des rainures 2 pour la fixation d'un boîtier, par exemple d'un potentiomètre, et sur sa face avant un prolongement oblique 3 pouvant être fixé sur le plancher 4 du véhicule par exemple par des boulons $5a$ et $5b$.

A sa partie supérieure, le corps 1 présente une gorge 6 dont le diamètre est sensiblement égal à celui de l'axe $7a$ d'une pédale 7 et qui s'étend sur un angle supérieur à 180°. Cette gorge est bordée par deux barrettes longitudinales 8 élastiquement déformables dont les faces 9 situées en vis-à-vis sont chanfreinées et se raccordent à la gorge 6 par deux faces verticales 10. Les faces externes des barrettes présentent un décrochement en forme de rampe 11 par exemple à 45°.

Le corps 1 présente à l'extérieur des barrettes 8 deux nervures latérales 12 écartées des barrettes par des rainures 13.

Le support comprend également un chapeau 14, en matière plastique relativement rigide, comportant deux ailes 15 et une partie centrale 16 dont la face inférieure $16a$ est cylindrique au même rayon que la gorge 6. Les ailes 15 présentent sur leur face intérieure une rampe 17 à 45° et sont écartées l'une de l'autre d'une distance sensiblement égale à celle des faces 11 des barrettes 8. Ces ailes sont terminées par des parties verticales 18 pouvant s'engager dans les rainures 13. L'une de ces parties 18 présente un bossage 19 pouvant s'engager dans un évidement 20 prévu dans la face interne de la nervure 12 correspondante.

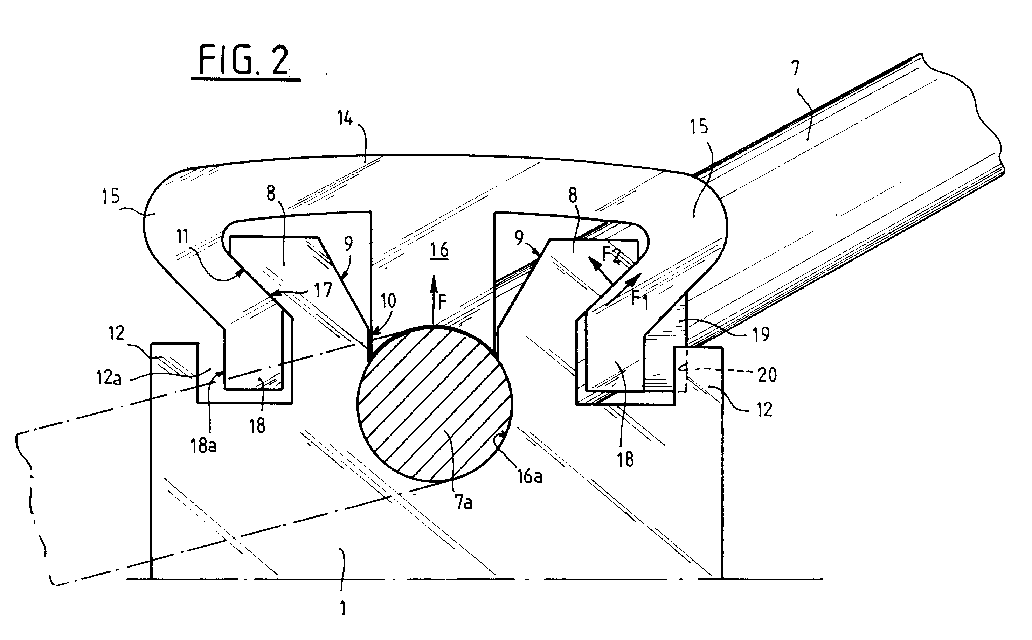

Pour fixer la pédale 7 au support, le corps 1 ayant été préalablement fixé au plancher par les boulons $5a$ et $5b$, on encastre l'axe $7a$ de la pédale 7 dans la gorge 6 dans laquelle elle est clippée. Puis on met en place le chapeau 14 par translation dans le sens de la flèche $f$. Les rampes 17 des ailes 15 glissent contre les rampes 11 des barrettes 8 et, en fin de mouvement, le bossage 19 s'engage dans l'évidement 20, ce qui arrête le mouvement de translation du chapeau 14. Les nervures 12 empêchent le déplacement des parties 18 donc des ailes 15 dans la direction de la flèche $F_1$ (Figure 2).

Lors de l'utilisation de la pédale, les efforts exercés sur celle-ci tendent à déplacer son axe $7a$ vers le haut, comme indiqué par le flèche F qui représente la réaction de l'axe sur le chapeau 14. Du fait de la présence des rampes 11 et 17 et des déformations élastiques, cette réaction est équilibrée par les forces de contact $F_1$ et $F_2$. Il y a glissement suivant $F_1$ et les ailes s'écartent.

La face extérieure latérale $18a$ de chaque partie 18 se rapproche de la face latérale intérieure $12a$ de la nervure 12 adjacente. Quand le déplacement suivant $F_1$ ne se produit plus les deux faces sont en contact, le chapeau reste bloqué et maintient l'axe $7a$ en position, aux déformations élastiques près.

On voit de la description qui précède, que le support selon l'invention est très simple et permet un montage et un démontage de la pédale 7 sans outillage. Il est possible de monter la pédale sur son support en dehors du véhicule, éventuellement de manière automatique. On a une bonne répartition des efforts pour le maintien de l'axe de rotation 7a de la pédale.

## Revendications

1. Support formant palier pour un axe (7a), notamment pour un axe de pédale, comportant une embase (1), en matière plastique, formant corps de palier et propre à être fixé sur une paroi, et un chapeau de palier (14), également en matière plastique, fixé sur l'embase en enserrant l'axe, caractérisé par des décrochements proéminents (8), en forme de rampes obliques (11), formés dans la partie supérieure de l'embase (1) et coopérant avec des rampes (17) de même obliquité formées sur le chapeau (14) du palier, pour maintenir le chapeau de palier (14), ce chapeau étant mis en place par translation de celui-ci sur l'embase et le blocage du mouvement de translation étant obtenu par clippage.

2. Support selon la revendication 1, caractérisé en ce que l'embase (1) présente à sa partie supérieure une gorge (6) dont le diamètre est sensiblement égal à celui de l'axe (7a).

3. Support selon la revendication 1 ou 2, caractérisé en ce que le chapeau (14) présente une partie centrale (16) dont la face inférieure (16a) est cylindrique au même rayon que la gorge (6), et deux ailes (15) dont les faces intérieures (17) coopèrent avec les rampes obliques (11) de l'embase (1).

4. Support selon la revendication 2 ou 3, caractérisé en ce que la gorge (6) s'étend sur un angle supérieur à 180° de sorte que l'axe (7a) est clipsé dans cette gorge.

5. Support selon l'une des revendications 1 à 4, caractérisé en ce que la gorge (6) est bordée par deux barrettes longitudinales (8) dont les faces extérieures comportent des rampes (11).

6. Support selon la revendication 5, caractérisé en ce que l'embase présente à l'extérieur des barrettes (8) des nervures latérales (12) écartées de ces barrettes.

7. Support selon la revendication 6, caractérisé en ce que les ailes (15) du chapeau sont terminées par des parties verticales (18) propres à s'engager entre les barrettes (8) et les nervures (12).

8. Support selon la revendication 7, caractérisé en ce que l'une des parties verticales (18) présente un bossage (19) pouvant s'engager dans un évidement (20) prévu sur la face interne de la nervure (12) correspondante.

## Patentansprüche

1. Das Lager für eine Achse (7a), insbesondere für eine Pedalachse, bildender Träger mit einer Fußplatte (1) aus Kunststoffmaterial, die den Lagerkörper bildet und dazu geeignet ist, an einer Wand befestigt zu sein und einer ebenfalls aus Kunststoffmaterial bestehenden Lagerkappe (14), welche die Achse umfassend an der Fußplatte befestigt ist, gekennzeichnet durch vorspringende Absätze (8) in Form von schrägen Rampen (11), die am Oberteil der Fußplatte (1) ausgebildet sind und mit Rampen (17) der gleichen Schrägstellung zusamnenwirken, die an der Lagerkappe (14) ausgebildet sind zum Festhalten der Lagerkappe (14), wobei diese Lagerkappe (14) durch Aufschieben auf die Fußplatte montiert wird und die Blockierung der Verriegelungsbewegung durch Einrasten erhalten wird.

2. Träger nach Anspruch 1, dadurch gekennzeichnet, daß die Fußplatte (1) an ihrem Oberteil eine Nut (6) aufweist, deren Durchmesser im wesentlichen gleich dem Durchnesser der Achse (7a) ist.

3. Träger nach Anspruch 1 oder 2, dadurch gekennzeichnet, daß die Kappe (14) einen zentralen Teil (16) aufweist, dessen untere Oberfläche (16a) zylindrisch mit dem gleichen Radius wie die Nut (6) ausgebildet ist, sowie zwei Flügel (15), deren Innenflächen (17) mit den schrägen Rampen (11) der Fußplatte (1) zusammenwirken.

4. Träger nach Anspruch 2 oder 3, dadurch gekennzeichnet, daß die Nut (6) sich über einen Winkel von mehr als 180° erstreckt, derart, daß die Achse (7a) in diese Nut eingerastet ist.

5. Träger nach einem der Ansprüche 1 bis 4, dadurch gekennzeichnet, daß die Nut (6) von zwei in Längsrichtung verlaufenden Stegen (8) begrenzt ist, deren äußere Oberflächen die Rampen (11) tragen.

6. Träger nach Anspruch 5, dadurch gekennzeichnet, daß die Fußplatte außerhalb der Stege (8) seitliche Rippen (12) aufweist, die im Abstand von diesen Stegen angeordnet sind.

7. Träger nach Anspruch 6, dadurch gekennzeichnet, daß die Flügel (15) der Kappe vertikale Endabschnitte (18) aufweisen, die dazu geeignet sind, zwischen die Stege (8) und die Rippen (12) einzugreifen.

8. Träger nach Anspruch 7, dadurch gekennzeichnet, daß einer der vertikalen Endabschnitte (18) einen Vorsprung (19) aufweist, der in eine Ausnehmung (20) eingreifen kann, welche in der inneren Oberfläche der entsprechenden Rippe (12) vorgesehen ist.

## Claims

1. Support forming a bearing for a pin (7a), in particular for a pedal pin, comprising a plastic base (1) forming a bearing body and able to be secured to a wall, and a bearing cap (14), also made of plastic, secured to the base, thus encompassing the axis, characterized by projecting steps (8) in the shape of oblique ramps (11) formed in the upper portion of the base (1) and cooperating with ramps (17) having the same obliquity formed on the cap (14) of the bearing so as to maintain the bearing cap (14), this cap being placed via the translation of the latter on the base, blocking of the translation movement being obtained by clipping.

2. Support according to claim 1, wherein the base (1) has at its upper portion a throat (6) whose diameter is roughly equal that of the pin (7a).

3. Support according to claim 1 or 2, wherein the cap (14) has one central section (16) whose lower face (16a) is cylindrical with the same radius as that of the throat (6), and two wings (15) whose internal faces cooperate with the oblique ramps (11) of the base (1).

4. Support according to claim 2 or 3, wherein the throat (6) extends over an angle of more than 180 degrees so that the pin (7a) is clipped into this throat.

5. Support according to any one of claims 1 to 4, wherein the throat (6) is edged by two longitudinal small bars (8) whose external faces comprise ramps (11).

6. Support according to claim 5, wherein the base has outside the small bars (8) lateral ribs (12) spaced from these small bars.

7. Support according to claim 6, wherein the wings (15) of the cap are ended by vertical sections (18) able to be engaged between the small bars (8) and the ribs (12).

8. Support according to claim 7, wherein one of the vertical sections (18) has a boss (19) able to be engaged in a recess (20) provided on the internal face of the corresponding rib (12).

FIG.1

FIG. 2